# EUROPÄISCHE PATENTANMELDUNG

(11) **EP 1 277 566 A2**
(43) Veröffentlichungstag der Anmeldung: **22.01.2003**
(21) Anmeldenummer: 02015959.6
(22) Anmeldetag: 18.07.2002
(51) Int. Cl.: B30B 15/28, B30B 15/10

(54) **Einrichtung für eine Bearbeitungsmaschine, insbesondere Stanzmaschine, Presse od. dgl.**

(30) Priorität: 21.07.2001 DE 10135663; 17.12.2001 DE 10162148; 10.07.2002 DE 20210713 U
(71) Anmelder: Ortlinghaus-Werke GmbH, 42929 Wermelskirchen (DE)
(72) Erfinder: Carsten Dammmüller, D-58456 Witten (DE); Bernhard Hämmerl, D-42929 Wermelskirchen (DE); Rainer Stuhlmüller, D-42899 Remscheid (DE); Udo Meller, D-42929 Wermelskirchen (DE); Herbert Seeger, D-32547 Bad Oeynhausen (DE)
(74) Vertreter: Ludewig, Karlheinrich, Dipl.-Ing.

(57) **Zusammenfassung**

Die Erfindung betrifft eine Einrichtung für eine Bearbeitungsmaschine, insbesondere Stanzmaschine, Presse od.dgl. mit wenigstens einem bewegbaren Werkzeug (17), mit einem Antrieb (10) für das bewegbare Werkzeug und mit einer Hochhalteeinrichtung (24) zur Sperrung der Bewegung des bewegbaren Werkzeuges. Erfindungsgemäß ist die Hochhalteeinrichtung (24) gezielt steuerbar ausgebildet und an die vorhandene Bremseinrichtung (23) angebaut, hierbei liegen bezüglich des Antriebes (10) Hochhalteeinrichtung (24) und Bremseinrichtung (23) nebeneinander, wobei ein Teil der Hochhalteeinrichtung (24) und ein Teil der Bremseinrichtung (23) an einem gemeinsamen Gehäuseabschnitt (25, 50) angreifen und dass die drehbare Hochhalteeinrichtung (24) formschlüssig mit dem Drehteil (13) kuppelbar ist zur Sperrung der Drehbewegung des Drehteiles (13).

## Beschreibung

Die Erfindung betrifft eine Einrichtung für eine Bearbeitungsmaschine, insbesondere Stanzmaschine, Presse od.dgl., mit wenigstens einem bewegbaren Werkzeug, über das ein Werkstück bearbeitbar ist, mit einem Maschinenantrieb zur Bewegung eines das Werkzeug bewegenden Drehteils, insbesondere eine Kurbelwelle, Exzenterwelle od. dgl., mit einer Bremseinrichtung zur Stillsetzung der Bewegung des Drehteiles und mit einer Hochhalteeinrichtung zur Sperrung der Bewegung des bewegbaren Werkzeuges. Derlei Maschinen werden in vielfältiger Weise gebraucht. Sie weisen jedoch noch Sicherheitsmängel auf und zwar ist es nicht absolut sichergestellt, dass das bewegbare Werkzeug in der gebremsten Stellung in der gewünschten Lage verbleibt. Ist beispielsweise die Bremse aus einer Lamellenbremse aufgebaut, so besteht die Gefahr, dass bei schon einer geringfügigen Lösung der Lamellenbremse das bewegbare Werkzeug freigesetzt wird und die Bedienungspersonen, die in diesem Bereich arbeiten, erheblich gefährdet werden. Es muss hierbei noch berücksichtigt werden, dass derlei Bearbeitungsmaschinen relativ groß sind, ein hohes Gewicht haben, so dass, falls beispielsweise das bewegbare Werkzeug in Bewegung gerät, erhebliche Kräfte freikommen.

Man hat schon vorgeschlagen, durch Balken das Werkzeug abzustützen, um so die Kräfte auffangen zu können. Von Nachteil ist hierbei, dass bei einer solchen Anordnung an die Werkzeuge selber nicht mehr herangekommen werden kann, insbesondere sie können nicht mehr ausgetauscht werden. Darüber hinaus besteht die Gefahr, dass beim Anstoßen gegen solche Balken diese aus der Maschine herausrutschen und das bewegbare Werkzeug doch in Bewegung gerät.

Eine Hochhalteeinrichtung ist aus der DE 199 10 965 A 1 bekannt geworden. Die Antriebswelle ist drehfest mit einer Büchse versehen, die an ihrem Außenumfang eine Ringverzahnung trägt. Um die Büchse herum ist eine Führungsbüchse vorgesehen mit einem Formstück. Die Führungsbüchse trägt eine ringartige Innenverzahnung. Zum Festsetzen kommen Innen- und Außenverzahnung in Eingriff. Um eine Verschiebung vorzunehmen, müssen die Zähne von einer der Verzahnungen abgetastet werden, während die andere Verzahnung eine Drehbewegung durchführt. Diese Anordnung ist relativ aufwendig, insbesondere die Steuerungen erfordern eine präzise Einstellung. Darüber hinaus weist diese Hochhalteeinrichtung keine Bremse auf, um so eine Verriegelung vornehmen zu können. Der konstruktive Aufwand ist relativ groß.

Aufgabe der Erfindung ist es daher, die bisherigen eingangs genannten Einrichtungen noch sicherer zu gestalten, insbesondere, dass durch eine steuerbare Vorrichtung die gewünschten Stellungen der Hochhalteeinrichtung fest eingestellt werden können, ohne dass befürchtet werden muss, dass diese sich selbsttätig lösen. Darüber hinaus soll der konstruktive Aufwand relativ gering sein, um so derartige Einrichtungen preiswert herstellen zu können. Schließlich soll die Verriegelung der Hochhalteeinrichtung sicher und einfach erfolgen.

Diese Aufgabe wird erfindungsgemäß dadurch gelöst, dass die Hochhalteeinrichtung an die Bremseinrichtung angebaut ist, hierbei liegen bezüglich des Antriebes Hochhalteeinrichtung, Bremseinrichtung nebeneinander, wobei ein Teil der Hochhalteeinrichtung und ein Teil der Bremseinrichtung an einem gemeinsamen Gehäuseabschnitt eingreifen und die steuerbare Hochhalteeinrichtung formschlüssig mit dem Drehteil kuppelbar ist zur Sperrung der Drehbewegung des Drehteiles. Die unmittelbare Nebeneinanderanordnung von Lamellenbremse und Hochhalteeinrichtung erlaubt eine kompakte Bauweise, darüber hinaus ist eine einfache Montagemöglichkeit gegeben. Durch die formschlüssige Sperrung des Bewegungsantriebes wird automatisch das bewegbare Werkzeug an einer Bewegung gehindert. Es bleibt in dieser gebremsten Stellung stehen, bis die Hochhalteeinrichtung wieder in die Freigabestellung umgeschaltet wird. Darüber hinaus ist von Vorteil, dass die Werkzeuge, sowohl das bewegbare als auch das feste Werkzeug, bei einer solchen Sperre ausbaubar oder austauschbar oder reparierbar sind. Schließlich kann durch die formschlüssige Sperrung die eigentliche Lamellenbremse auch überarbeitet werden, da durch den formschlüssigen Eingriff der Hochhalteeinrichtung das Drehteil keine Bewegung ausführen kann.

Von Vorteil ist es, wenn Hochhalteeinrichtung und Bremseinrichtung als Baueinheit ausgebildet ist. Diese Anordnung erlaubt eine kompakte Bauweise, darüber hinaus kann ein Austausch zu Reparaturzwecken schneller vorgenommen werden, schließlich kann auch eine gemeinsame Steuerung der beiden Einrichtungen durchgeführt werden.

Bei einem besonderen Ausführungsbeispiel der Erfindung ist die Hochhalteeinrichtung zwischen der Kupplung des Antriebes und dem Kurbelabschnitt bzw. dem Exzenterabschnitt angeordnet. Auf diese Weise wird erreicht, dass der eigentliche Kurbelabschnitt und der Exzenterabschnitt frei von den baulichen Abmessungen der Hochhalteeinrichtung und der Bremseinrichtung ist, so dass etwaige Arbeiten am bewegbaren Werkzeug oder am feststehenden Werkzeug sicher durchgeführt werden können. Von besonderem Vorteil ist es, wenn zwischen Hochhalteeinrichtung und Kurbelabschnitt bzw. dem Exzenterabschnitt ein Untersetzungsgetriebe angeordnet ist. Auf diese Weise ist es möglich, die Hochhalteeinrichtung im schnelllaufenden Teil des Drehteiles des Antriebes anzuordnen, während der Kurbelabschnitt bzw. Exzenterabschnitt im langsam laufenden Teil vorgesehen ist, wobei hierdurch Hochhalteeinrichtung und Bremseinrichtung nicht besonders stark ausgebildet werden, da die Drehmomentübertragung es ermöglicht, eine leichte Ausführung für die Hochhalteeinrichtung einzusetzen auf Grund der hohen Drehgeschwindigkeit, während von der Presse selber her der dortige Teil bereits stabil ausgedrückt ist. Demgemäss brauchen auch beim Abbremsen oder bei der Halterung keine besonders aufwendigen Hochhalteeinrichtungen bzw. Bremsen verwendet werden.

Im schnelllaufenden Abschnitt - also dem Untersetzungsgetriebe - steht gegenüber dem Ausgang ein kleiner Drehmoment zur Verfügung, an der Ausgangsseite dagegen ein großes. Auf der Eingangsseite können daher die Bauelemente schwach ausgebildet werden, wobei die Stabilität der Bauelemente nicht vernachlässigt ist, während auf der Ausgangsseite, also dem Abtrieb, die Bauelemente stark ausgebildet sind, so das der Raumbedarf dort größer ist.

Bei einem besonderen Ausführungsbeispiel der Erfindung sind Kupplungseinrichtung, Bremseinrichtung, Hochhalteeinrichtung, Untersetzungsgetriebe und Kurbelabschnitt bzw. Exzenterabschnitt im Kraftübertragungssinne hintereinander angeordnet. Diese Maßnahme erlaubt eine übersichtliche Anordnung, darüber hinaus eine leichte Montage und einen leichten Einbau. Besonders von Vorteil ist es hierbei, wenn in Achseinrichtung des Antriebes mit Schwungrad gesehen auf einer Seite des Antriebes mit Schwungrad, Kupplungseinrichtung, Bremseinrichtung und Hochhalteeinrichtung liegen und auf der anderen Seite Untersetzungsgetriebe und Kurbelabschnitt bzw. Exzenterabschnitt, da hier eine überaus kompakte Bauweise gegeben ist, die sicherstellt, dass die schnelllaufenden Teile auf der einen Seite liegen, während das Untersetzungsgetriebe mit Kurbelabschnitt unter dem Exzenterabschnitt auf der anderen Seite.

Besonders günstig ist es hierbei, dass eine glockenförmige Abdeckung an der Seite des Antriebes vorgesehen ist, an der die Hochhalteeinrichtung liegt, hierbei ist der Glockenrand drehfest an dem Antrieb mit Schwungrand vorgesehen. Diese Maßnahme erlaubt weiter eine überaus kompakte Anordnung, darüber hinaus auch ein sicheres Unterbringen der einzelnen schnelldrehenden Teile.

Vorteilhafterweise ist die Hochhalteeinrichtung elektrisch und/oder fluid gesteuert, um so schnell die formschlüssige Sperrung in ihre Blockierstellung als auch in ihrer Freigabestellung überführen zu können.

Bei einem besonderen Ausführungsbeispiel der Erfindung ist die Hochhalteeinrichtung mit einem Zahnkranzabschnitt drehfest an dem Drehteil angeordnet, hierbei greift zur Sperrung der Drehbewegung ein drehfest installierter Gegenzahnkranz ein.

Durch Zahnkranzabschnitt und Gegenzahnkranzabschnitt ist eine sichere Festlegung und formschlüssige Halterung des Drehteiles bzw. Drehantriebs gewährleistet.

Vorteilhafterweise ist die Hochhalteeinrichtung mit einem zweiten, Steuerleitungen tragenden Abschnitt, fest an dem Gehäuse vorgesehen. Auf diese Weise kann die Steuerung vom Zahnkranzabschnitt und Gegenzahnkranz sicher vorgenommen werden.

Vorteilhafterweise ist ein dritter Abschnitt der Hochhalteeinrichtung mit einem Gegenzahnkranz ausgestattet, hierbei ist der dritte Abschnitt längsverschiebbar zum Drehteil gelagert. Durch diese Maßnahme kann der formschlüssige Eingriff von Zahnkranzabschnitt und Gegenzahnkranzabschnitt leicht durchgeführt werden und sicher die Blockierung der Bewegung der Drehwelle vorgenommen werden. Bei einem besonderen Ausführungsbeispiel ist der Zahnkranzabschnitt zur Achse des Drehteiles verschiebbar, um so leicht und sicher den Eingriff von Zahnkranz und Gegenzahnkranz durchführen zu können.

Vorteilhafterweise führt bei der Zahnkranzabschnittverschiebung der Zahnkranzabschnitt über eine Führung eine Drehbewegung aus. Durch diese Drehbewegung ist sichergestellt, dass die Zähne des Zahnkranzes sich leicht drehen, um somit leicht in die Zähne des Gegenzahnkranzabschnittes eingreifen zu können, ohne dass es zu einem gestörten Ablauf kommen könnte, in dem dann die Zähne sich stirnseitig berühren und eine Verschiebung nicht möglich ist.

Eine Führung hat die Aufgabe, eine drehfeste Halterung an dem Drehteil der Bearbeitungsmaschine zu gewährleisten. Von Vorteil ist es hierbei, wenn der Zahnkranzabschnitt in seiner einen Endstellung, die durch einen Anschlag begrenzt ist, durch eine Feder belastet wird, da durch diese Maßnahme bei Freigabe der Hochhalteeinrichtung die Bewegung des Drehteiles durchgeführt werden kann.

Bei einem besonderen Ausführungsbeispiel der Erfindung ist der längsverschiebbare Gegenzahnkranzabschnitt an einer am feststehenden Bremsgehäuse vorgesehenen Führung bewegbar gelagert, um auf diese Weise eine Verschiebung zur Kupplung von Zahnkranz und Gegenzahnkranz durchführen zu können, hierbei ist erfindungsgemäß die Führung zugleich eine Führung für die bewegbaren sich nicht drehenden Lamellen der Lamellenbremse. Auf diese Weise ist die Größe der Baueinheit aus Bremse und Hochhalteeinrichtung verkleinerbar. Durch die Führung wird aber auch die Drehung des Gegenzahnkranzes verhindert.

Von besonderer Bedeutung ist es, dass die Haltestellung der Hochhalteeinrichtung durch eine Überwachungseinrichtung anzeigbar ist. Auf diese Weise ist optisch feststellbar, ob die Hochhalteeinrichtung in ihrer Blockierstellung ist oder nicht.

Bei einem besonderen Ausführungsbeispiel der Erfindung sind sowohl die Zähne des Zahnkranzes als auch die Zähne des Gegenzahnkranzes aus einer Stirnverzahnung aufgebaut. Bei einem anderen Ausführungsbeispiel der Erfindung sind die Zähne vom Zahnkranz und Gegenzahnkranz als Planverzahnung ausgebildet.

Bei einem besonderen Ausführungsbeispiel der Erfindung verläuft die Führung des Zahnkranzabschnittes leicht gewindeförmig, um so bei einer Längsverschiebung eine kleine geringfügige Drehbewegung zu erzielen.

Bei einem weiteren Ausführungsbeispiel der Erfindung ist die Einrichtung zur lösbaren drehfesten Verbindung von konzentrisch angeordneten Maschinenteilen, insbesondere bei einer Hochhalteeinrichtung vorgesehen, von denen ein Maschinenteil eine Innenverzahnung und ein anderes Maschinenteil eine Außenverzahnung trägt, mit einer Kupplung, die eine ringartige Koppelscheibe zwischen zwei Einstellungen - einer Verriegelungsstellung und einer Freigabestellung - bewegt, hierbei weist die Koppelscheibe an ihrem Außenmantel sowie an ihrem Innenmantel eine Verzahnung auf, wobei die Verzahnung des Außenmantels an die Innenverzahnung des einen Maschinenteils greift und dass die Innenverzahnung des Innenmantels der Koppelscheibe in der Verriegelungsstellung in die Verzahnung des anderen Maschinenteiles greift, dass die Verzahnung des Außenmantels mit Spiel in die Innenverzahnung des ersten Maschinenteiles eingreift, hierbei liegt das Spiel vorteilhafterweise wenigstens in der Größe einer halben Zahnbreite eines Zahnes der Koppelscheibe, wobei zur Überführung in die Verriegelungsstellung die Koppelscheibe gegenüber dem ersten Maschinenteil verdrehbar gelagert sei. Durch die unmittelbare Verdrehbarkeit der Koppelscheibe ist es möglich, dass bei Überführung in die Verriegelungsstellung automatisch die entsprechenden Verzahnungen ineinander eingreifen, selbst, wenn zunächst in einer ungünstigen Zahnstellung Zähne der Verzahnungen genau gegenüberliegen, die eine Bewegung in die Verriegelungsstellung behindern.

Vorteilhafterweise ist die Koppelscheibe in die Verriegelungsstellung über eine parallel zur Koppelscheibe liegende Ringscheibe überführbar. Durch die parallele Ringscheibe ist eine sichere Bewegung der Koppelscheibe gewährleistet, wobei bei der gemeinsamen Längsverschiebung eine ordnungsgemäße Führung der Koppelscheibe gewährbar ist. Besonders empfehlenswert ist es, wenn die Koppelscheibe und die Ringscheibe mit ihrer Außenverzahnung in die Innenverzahnung des ersten Maschinenteiles axial verschiebbar ist. Durch diese Maßnahme kann bei der Kupplungsbewegung der beiden Verzahnungen eine sichere Führung erreicht werden. Günstigerweise ist zwischen Ringscheibe und Koppelscheibe eine Feder, insbesondere Wellenfeder, angeordnet, dass bei Stillstand in ihrer Axialbewegung der Koppelscheibe die Ringscheibe noch eine weitere Bewegung ausführen kann unter Zusammendrückung der Feder.

Bei einem besonderen Ausführungsbeispiel der Erfindung sind Koppelscheibe und Ringscheibe gegeneinander verdrehbar, hierbei ist die Größe des Verdrehwinkels durch das Zahnspiel der Zähne der Koppelscheibe in der Verzahnung des ersten Maschinenteils gegeben.

Empfehlenswerterweise greift die Verzahnung der Ringscheibe in die Innenverzahnung des ersten Maschinenteiles ein, hierbei entspricht die Zahnbreite des Zahnes der Ringscheibe der Zahnlücke der Innenverzahnung des Maschinenteiles, so dass die Ringscheibe unverdrehbar an dem ersten Maschinenteil gelagert ist.

Empfehlenswerterweise ist die Ringscheibe mit einer Schraube an einem steuerbaren Kolben der Vorrichtung befestigt. Auf diese Weise kann die Ringscheibe bei Bewegung des Kolbens axial verschoben werden, hierbei ist der Kolben bzw. die Vorrichtung entweder elektromechanisch oder hydraulisch betätigbar.

Bei einem besonderen Ausführungsbeispiel der Erfindung stützt sich zwischen Kolben und Ringscheibe eine Führungshülse ab, hierbei durchquert die Befestigungsschraube die Führungsfläche in ihrem Inneren, während an ihrem Außenumfang ein Gleitstein angeordnet ist, der in einer Kulissenführung in der Koppelscheibe radial bewegbar ist. Durch diese Maßnahme ist eine Verdrehung zwischen Koppelscheibe und Ringscheibe möglich, da der Gleitstein sicher in der Kulissenführung verschiebbar ist. Die Koppelscheibe führt eine Drehung aus, während Ringscheibe und Gleitstein keine Drehbewegung ausführt. Die Führungshülse selber gestattet in ihrer Länge eine sichere Festlegung der Koppelscheibe in der einen Endstellung zwischen Kolben und Ringscheibe. Günstigerweise ist der Gleitstein an zwei gegenüberliegenden Seiten in seiner Bewegungsrichtung liegenden Druckfedern belastet. Bei einer Verschiebung des Gleitsteines wird eine der Federn gespannt, während die andere Feder leicht entspannt wird. Auf Grund dieser Maßnahme erhält bei Freigabe des Gleitsteines bzw. der Koppelscheibe dieser seine Mittellage.

Um eine genaue mechanische Justierung vorzunehmen, ist die Federkraft der Feder jeweils durch eine Schraube in der Koppelscheibe justierbar. Günstigerweise führt bei axialer Näherung von Ringscheibe zur Koppelscheibe - hervorgerufen durch die Bewegung des Kolbens bzw. der Zähneberührung der Innenverzahnung der Koppelscheibe und der Außenverzahnung des zweiten Maschinenteiles - eine Drehbewegung aus, die durch das Spiel der Außenverzahnung der Koppelscheibe in der Innenverzahnung des ersten Maschinenteiles begrenzt ist. Durch diese Drehbewegung erfolgt zwischen der Innenverzahnung der Koppelscheibe und der Außenverzahnung des zweiten Maschinenteiles eine Änderung der beiderseitiger Zähne zueinander, so dass die Zähne der Koppelscheibe zwischen die Zähne der Außenverzahnung des zweiten Maschinenteiles eingreifen können.

Vorteilhafterweise ist - zur Einleitung der Drehbewegung - die Ringscheibe Träger eines nach der Koppelscheibe gerichteten Druckbolzen mit verjüngtem Ende, hierbei liegt der Druckbolzen in etwa gegenüber einer Ausnehmung in der Koppelscheibe, die mit einer Erweiterung zum Druckbolzen weist, wobei die Erweiterung und Verjüngung durch die einander berührenden Winkelflächen eine Drehbewegung einleiten.

Vorteilhafterweise wirkt die Feder zwischen Koppelscheibe und Ringscheibe als Kraftspeicher derart, dass die Scheiben wieder auseinander gedrückt werden, sobald die Innenverzahnung der Koppelscheibe in die Außenverzahnung des zweiten Maschinenteiles gleiten kann. Hierdurch bedingt, wird durch die Rückstellung der Ringscheibe wieder ein ursprünglicher Abstand von der Koppelscheibe bewegt. Bei einer weiteren Bewegung werden die Zähne in ihre Verriegelungsstellung überführt.

Empfehlenswert ist es, wenn die Innenverzahnung der Koppelscheibe aus der Außenverzahnung des zweiten Maschinenteiles gleitet, der Gleitstein durch seine beiden Federn in seine Mittelstellung in der Kulissenführung zurückfährt und somit die Freigabestellung erzielt ist. Die beiden Maschinenteile sind dann in ihrer Bewegung unabhängig voneinander.

Bei einem besonderen Ausführungsbeispiel der Erfindung ist die Verriegelungsstellung einstellbar, wenn die Relativbewegung zwischen den beiden Maschinen gleich Null ist. Bei dieser Ausführung können zwei sich drehende Maschinenteile auch mit der erfindungsgemäßen Verriegelungsvorrichtung versehen werden und drehfest miteinander gekuppelt werden.

Auf der Zeichnung ist der Erfindungsgegenstand in mehreren Ausführungsbeispielen dargestellt und zwar zeigen:
- Fig. 1: schematisch eine Prinzipskizze der Bearbeitungsmaschine,
- Fig. 2: in größerem Maßstab einen Querschnitt durch die Hochhalteeinrichtung mit Drehteil und Lamellenbremse,
- Fig. 3: die Hochhalteeinrichtung mit einer anderen Verzahnung,
- Fig. 4: eine weitere schematische Prinzipsskizze der Einrichtung,
- Fig. 5: einen Längsschnitt durch Einrichtung und
- Fig. 6: im größerem Maßstabe Fig. 5.
- Fig. 7: einen Längsschnitt durch die Verriegelungsvorrichtung,
- Fig. 8: einen Schnitt gemäß der Linie II - II der Fig. 7,
- Fig. 9: einen Schnitt nach der Linie III - III der nebeneinanderliegenden Verzahnungen von Koppelscheibe und eines Maschinenteiles, in vergrößerter Darstellung,
- Fig. 10: einen Ausschnitt aus der Verdreheinrichtung der Verriegelungsvorrichtung,
- Fig. 11: in Schnittdarstellung einen Ausschnitt einer Kupplung,
- Fig. 12: eine Darstellung gemäß Fig. 7, jedoch mit verschobener Koppelscheibe,
- Fig. 13: die nebeneinanderliegenden Verzahnungen von Koppelscheibe und Maschinenteil in einer gegenüber Fig. 9 abgeänderten Stellung,
- Fig. 14: die Verdrehungvorrichtung nach Fig.10, jedoch bei Annäherung von Koppelscheibe und Ringscheibe,
- Fig. 15: eine Darstellung nach Fig. 14, jedoch in weiterer Annäherung von Koppelscheibe und Ringscheibe,
- Fig. 16: eine weitere Annäherung von Koppel- zur Ringscheibe gemäß Fig. 14,
- Fig. 17: die Verzahnung von Koppelscheibe und zweitem Maschinenteil kurz vor dem Eingriff,
- Fig. 18: die Ringscheibe liegt vollständig an der Koppelscheibe,
- Fig. 19: Darstellung gemäß Fig. 13 bei teilweiser Zwangsverdrehung der Koppelscheibe zum ersten Maschinenteil,
- Fig. 20: die beiden Maschinenteile mit ihrer Verzahnung gemäß Fig.7 im Eingriff,
- Fig. 21: eine Endlage der Verzahnung der Koppelscheibe in der Verzahnung des ersten Maschinenteiles,
- Fig. 22: die Zähne von Koppelscheibe und zweiten Maschinenteilen im Eingriff und
- Fig. 23: die Rückstellung der Ringscheibe zur Koppelscheibe.

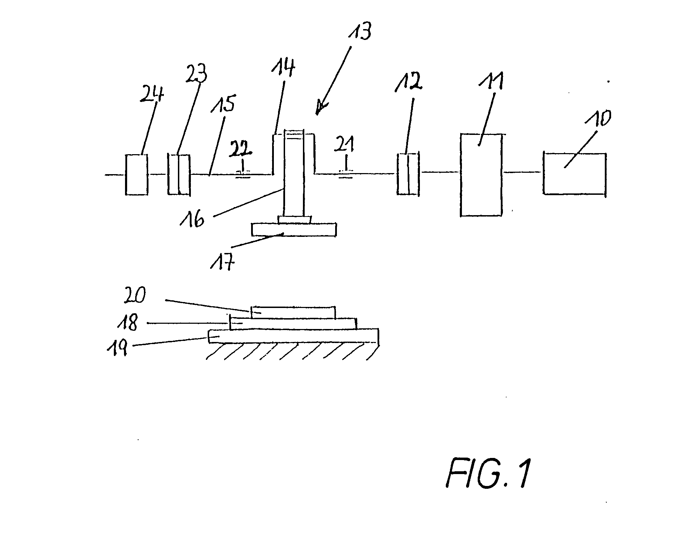

Die in Fig. 1 dargestellte Bearbeitungsmaschine ist schematisch dargestellt. Sie weist einen Antrieb 10 auf, der mit einem Schwungrad 11 gekoppelt ist. Nachfolgend ist eine Kupplung 12 vorgesehen. Über diese Kupplung ist zum Antrieb und zum Schwungrad die Kurbelwelle 13 zuschaltbar.

Die Kurbelwelle 13 besteht aus einem Kurbelabschnitt 14 sowie an dessen beiden Seiten aus Drehteilen 15. Der Kurbelabschnitt trägt einen Stößel 16, der an seinem Ende das bewegbare Werkzeug 17 haltert, das mit dem feststehenden Werkzeug 18, das in einem Auflager 19 angeordnet ist und das Werkstück 20 haltert, zusammenarbeitet.

Beiderseits des Kurbelabschnittes 14 sind Lager 21, 22 vorgesehen. Anschließend an das Lager 22 weist das Drehteil 15 eine Bremse 23 auf und daran anschließend eine Hochhalteeinrichtung 24, hierbei ist die Halteeinrichtung wenigstens mit einem Abschnitt an dem Gehäuse der Bremse drehfest angeordnet. Ein anderer Abschnitt liegt drehfest am Drehteil.

Nach Betätigung der Hochhalteeinrichtung 24 ist das Drehteil 15 drehfest an der Bremseinrichtung angeordnet. Die Kurbelwelle 13 kann sich nicht mehr drehen. Dieses bedeutet, dass der Stößel 16 mit dem bewegten Werkzeug 17 in der Lage verbleibt, die er bei Ansteuerung der Hochhalteeinrichtung einnimmt. Ein Ausbau der Werkzeuge oder sogar der Bremse 23 ist ohne weiteres möglich, es muss nicht befürchtet werden, dass die Kurbelwelle sich plötzlich dreht, und das bewegbare Werkzeug abwärts bewegt wird. Bei Ansteuerung der Hochhalteeinrichtung greift diese bereichsweise formschlüssig mit Zähnen in Gegenzähne des Bremsengehäuses ein. Es tritt eine formschlüssige Kupplung zwischen diesen beiden Teilen ein.

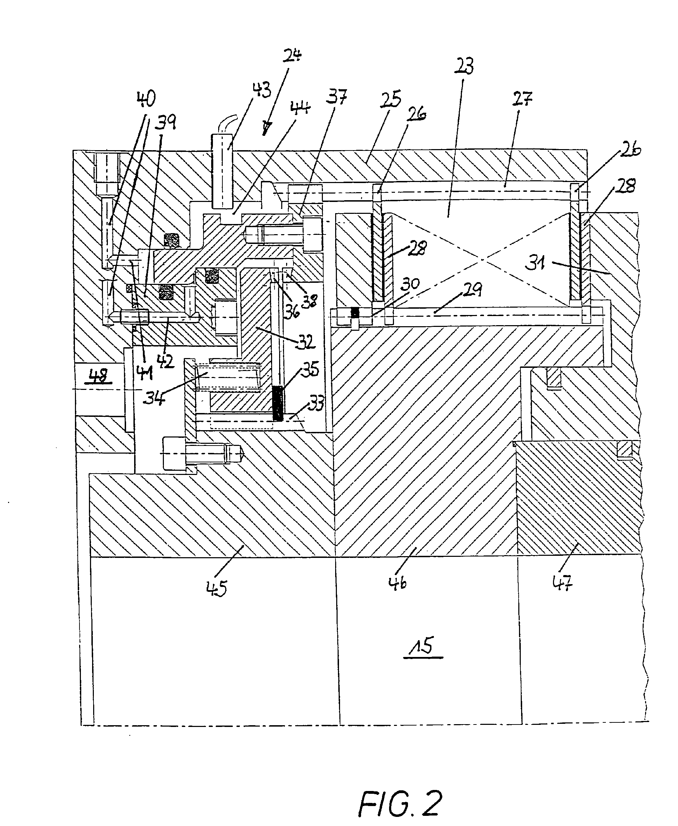

Bei dem Ausführungsbeispiel nach Fig. 2 ist die Bremse 23 und die Hochhalteeinrichtung 24 in einem gemeinsamen Gehäuse 25 vorgesehen.

Die Bremseinrichtung 23 ist als Lamellenbremse aufgebaut. Die feststehenden Lamellen 26 sind auf einer Führung 27 am Gehäuse 25 leicht verschiebbar gelagert, während die drehbaren Lamellen 28 am Drehteil 15 in einer Längsführung 29 angeordnet sind. Die Lamellen 26 und 28 können gegen einen Anschlag 30 angedrückt werden. Hierzu ist ein Hauptkolben 31 vorgesehen, der an einem Drehteil 15 axial verschiebbar gelagert ist. Das Drehteil 15 ist aus mehreren Abschnitten 45, 46, 47 aufgebaut, derart, dass alle einzelnen Abschnitte gemeinsam drehbar sind.

Ist der Hauptkolben 31 unbelastet, so liegen die Lamellen 26 und die Drehlamellen 28 nebeneinander derart, dass eine Rotation des Drehteiles stattfinden kann. Wird dahingegen der Hauptkolben mit einer Kraft beaufschlagt, wird gemeinsam das Lamellenpaket bestehend aus Lamellen 26 und 28 gegen den Anschlag 30 gedrückt, hierbei gleiten die Lamellen 26 in der Führung 27 und die Lamellen 28 in der Führung 29, bis die Lamellen 26 und 28 schließlich so dicht liegen, dass eine Bewegung zwischen den Lamellen nicht möglich ist. Es sei hier noch erwähnt, dass das Drehteil gegenüber dem Hauptkolben abgedichtet ist, hierzu dienen nicht näher bezeichnete Dichtringe.

Anschließend an die Bremse 23 ist die Hochhalteeinrichtung 24 vorgesehen. Diese Hochhalteeinrichtung 24 zeigt einen ersten Abschnitt 32. Dieser Abschnitt 32 ist drehfest mit dem Drehteil 15 verbunden. Der Abschnitt ist jedoch leicht axial verschiebbar bezüglich des Drehteiles 15. Hierzu weist das Drehteil eine Führung 33 auf, durch die bei einer Längsverschiebung der Abschnitt 32 eine geringfügige Drehbewegung ausübt. Der Abschnitt 32 ist durch eine Feder 34 belastet, deren Kraft den Abschnitt 32 gegen einen an der Führung 33 vorgesehenen Anschlag 35 drückt. Am radialen Rand des Abschnittes 32 ist eine Planverzahnung 36 vorgesehen. Diese Planverzahnung ist an sich drehfest mit dem Drehteil 15 verbunden. Die Führung weist eine Steigung auf, die so bemessen ist, dass bei einer Längsverschiebung eine Drehbewegung um einen ½ Zahn möglich ist.

Die Hochhalteeinrichtung 24 ist noch mit einem zweiten Abschnitt 37 versehen, der die Gegenzähne 38 trägt, die in den Zahnkranzabschnitt 32 eingreifen. Dieser Gegenzahnabschnitt 37 ist längsverschiebbar auf der Führung 27 vorgesehen, zugleich ist er drehfest mit dem Gehäuse 25 verbunden.

Schließlich weist die Hochhalteeinrichtung 24 noch einen Festabschnitt 39 auf. Dieser Abschnitt trägt die Steuerleitungen 40, durch die die Freigabe oder die Blockierung des Drehteiles 15 erreicht wird.

Es sei hier soviel bemerkt, dass die einzelnen bewegbaren Teile über Dichtringe abgedichtet sind, um so bei Beaufschlagung der Steuerleitungen 40 sicher zu sein, dass keine, beispielsweise Hydraulikflüssigkeit, austreten kann.

In der gezeigten Darstellung in Fig. 2 ist die Hochhalteeinrichtung in ihrer Freigabestellung. Die Steuerleitung 41 ist hierzu mit einem Druckmittel beaufschlagt, das den Gegenzahnabschnitt 37 über einen nicht näher bezeichneten Ringkolben von dem Zahnkranzabschnitt 32 wegdrückt.

Wird nun über die Steuerleitung 42 beispielsweise die Hydraulikflüssigkeit zugeführt, so bewegt sich der Gegenzahnabschnitt 37 mit den Gegenzähnen 38 auf den Zahnkranzabschnitt 32 zu, bis schließlich die Gegenzähne 38 den Zahnkranzabschnitt 32 berühren. Gemeinsam werden dann über die Steuerleitung 42 der Zahnkranzabschnitt 32 und der Gegenzahnabschnitt 37 gegen die Kraft der Feder 34 soweit verschoben, bis die Zähne und Gegenzähne genau in Eingriff sind. Es sei hier noch darauf hingewiesen, dass die Führung des Zahnkranzabschnittes leicht gewindeförmig gestaltet ist, so dass der Zahnkranzabschnitt etwa eine ½ Zahnbreitendrehung ausführen kann, um sicherzustellen, dass die beiden einander gegenüberliegenden Zähne der beiden Abschnitte ineinandergreifen. In diesem Falle ist dann schließlich das Drehteil 15 formschlüssig mit dem Gehäuse 25 verbunden. Eine Drehung der Kurbelwelle ist nicht mehr möglich. Die Bewegung des Drehteiles ist gesperrt. Nachzutragen bleibt noch, dass das Gehäuse 25 eine Öffnung 48 trägt, mit der das Bremsengehäuse an einem Maschinenständer befestigbar ist, also starr angeordnet ist.

Diese Endstellung der Blockierung ist über eine Kontrolleinrichtung 43 feststellbar, da in dieser Stellung die Kontrolleinrichtung genau über einer nutenförmigen Ausnehmung 44 des Gegenzahnabschnittes vorgesehen ist.

Sobald die Blockierung durchgeführt ist, können die Werkzeuge ausgetauscht werden, oder aber Reparaturen an der Lamellenbremse durchgeführt werden, ohne dass befürchtet werden muss, dass in Folge der großen Masse eine Bewegung der Kurbelwelle eintritt.

Es sei hier noch darauf hingewiesen, dass in Fig. 2 das Drehteil an seinem Ende in drei Radialabschnitte 45, 46, 47 unterteilt ist, hierbei ist die Hochhalteeinrichtung an dem Radialabschnitt 45 vorgesehen, die Bremse an dem Abschnitt 46 und der Hauptkolben an dem Radialabschnitt 47.

Die drei Abschnitte sind fest miteinander verbunden, so dass die Verbindung praktisch eine einstückige Ausbildung von der Wirkung her beinhaltet.

Folgt nun über die Steuerleitung 41 unter Abschaltung der Steuerleitung 42 eine Hydraulikflüssigkeit, so bewegt sich der Abschnitt 37 in Richtung auf die Bremse 23. Der Zahnkranzabschnitt 38 kommt frei von dem Gegenzahnkranzabschnitt 36. Über die Feder 34 wird dann der Abschnitt 32 gegen den Anschlag 35 gedrückt.

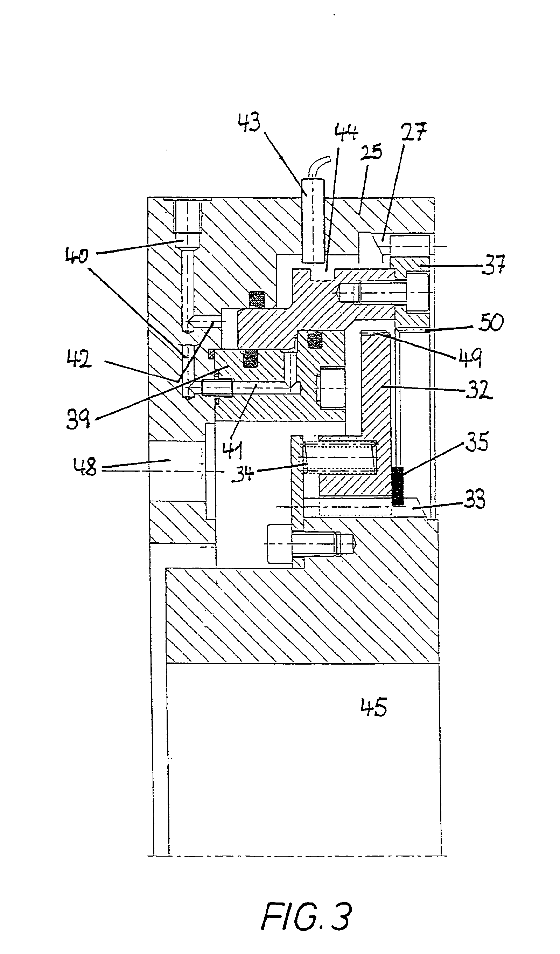

Bei dem Ausführungsbeispiel nach Fig. 3, das einen ähnlichen Aufbau wie das Ausführungsbeispiel nach Fig. 2 trägt, ist statt der Planverzahnung am Abschnitt 32 und dem Abschnitt 37 eine Stirnverzahnung 49 bzw. Gegenstirnverzahnung 50 vorgesehen. Zur Blockierung der Bewegung des Drehteiles 15 wird wiederum der Abschnitt 37 mit der Gegenstirnverzahnung 50 in die Stirnverzahnung 49 geschoben. Auch hier wird über die Kontrolleinrichtung 43 der Blockierzustand angezeigt.

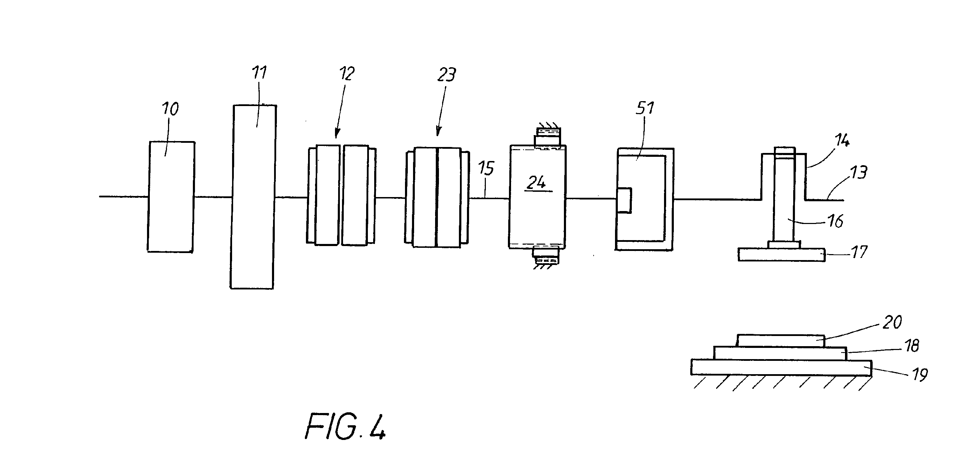

In Fig. 4 ist ein weiteres Ausführungsbeispiel der Erfindung dargestellt. Schematisch dargestellt liegen hinsichtlich der Kraftübertragungsrichtung der Antrieb 10, das Schwungrad 11, die Kupplung 12, die Bremse 23, die Hochhalteeinrichtung 24 sowie ein Untersetzungsgetriebe 51 und der Kurbelabschnitt 14 hintereinander. In der dargestellten Form ist die Kupplungseinrichtung 12 geöffnet, so dass vom Antrieb keine Drehbewegung auf die Kurbelwelle erfolgen kann. Die Bremseinrichtung 23 ist in ihrer Schließstellung. Die Hochhalteeinrichtung 24 ist in ihrer Sperrstellung. Mit anderen Worten, von der Bremseinrichtung 23 kann keine Drehbewegung auf den Kurbelabschnitt 14 ausgeübt werden.

Es sei hier bemerkt, dass die Hochhalteeinrichtung schematisch einen bewegbaren mit einer Außen- und Innenverzahnung versehenen Zwischenring aufweist, der einerseits in eine Verriegelungsstellung, andererseits in eine Freigabestellung überführt werden kann bei einer Verschiebung in Richtung des Drehteiles, wobei der in der Verriegelungsstellung die Außenverzahnung des Zwischenringes in eine Gegenverzahnung des Gehäuses und die Innenverzahnung in einer Gegenverzahnung des Drehteiles eingreift.

An die Hochhalteeinrichtung 24 schließt ein Untersetzungsgetriebe 51 an. Dieses Getriebe ist als Planetengetriebe ausgebildet. Es können mehrere Stufen von Untersetzungsgetrieben nacheinander angeordnet werden, um so die Drehzahl des Antriebes zu reduzieren.

An das Untersetzungsgetriebe 51 schließt sich der Kurbelabschnitt 14 an.

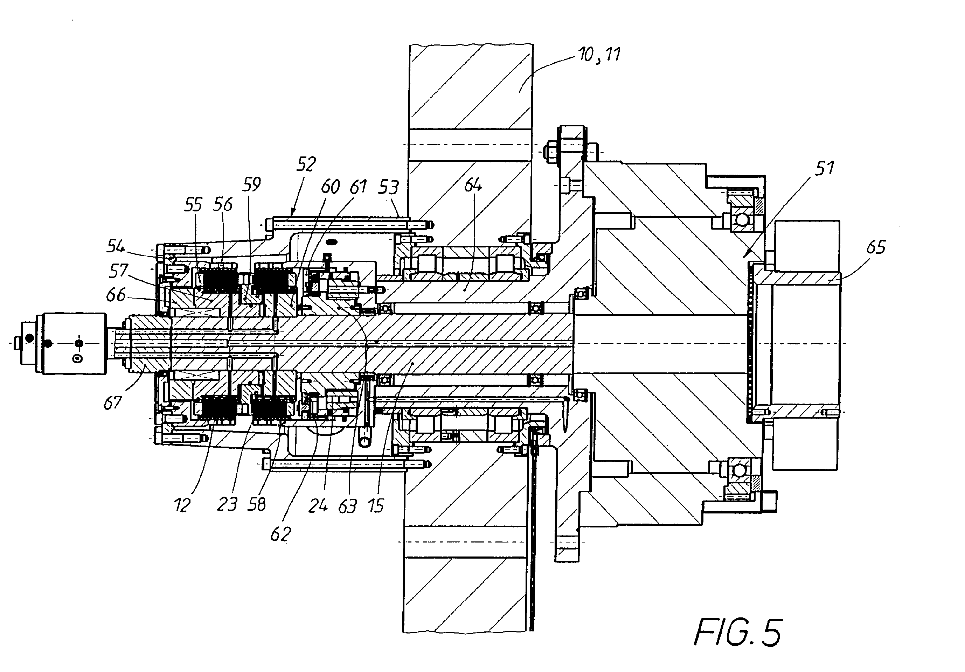

In Fig. 5 ist eine Kompaktbauweise dargestellt. Mittig, bezüglich des Bildes gesehen, ist der Antrieb 10 mit Schwungrad 11 vorgesehen. Seitwärts nach der einen Richtung des Drehteiles 15 schließt sich eine Drehübertragungsglocke 52 an. In der Mitte der Glocke liegt das Drehteil 15. Die Glocke ist mit ihrem Glockenrand 53 drehfest an dem Schwungrad 11 bzw. dem Antrieb 10 befestigt.

Der Glockenboden 54 ist ebenfalls drehfest mit der Übertragungsglocke 52 verbunden. Drehfest mit dem Boden 54 ist eine Halterung 56 für die äußeren Lamellen der Kupplung 12 vorgesehen. Die innere Halterung 57 der Lamellen ist drehfest mit dem Drehteil 15 ausgebildet. Vor den Lamellen ist eine ringartige Anschlagscheibe 55 vorgesehen. Die inneren und die äußeren Lamellen sind durch einen Kolben 59 belastet, der in Achsrichtung bewegbar ist und bei dem vorliegenden Ausführungsbeispiel über eine Hydraulik steuerbar ist. Bei einer Belastung des Kolbens liegt eine Kupplung zwischen Antrieb und Drehteil vor. Bei einer Entlastung des Kolbens ist der Antrieb von dem Drehteil getrennt.

Neben der Kupplungseinrichtung 12 ist eine Bremseinrichtung 23 vorgesehen. Ein Gehäuseteil 58 bietet dabei eine drehfeste Halterung für die äußeren Lamellen der Bremseinrichtung, während eine Bremsenhalterung 60 einerseits drehfest an dem Drehteil 15 angeordnet ist, andererseits die Lamellenringe innenliegend gegen eine Verdrehung haltert, wenn ein Kolben 59 die beiden Lamellengruppen zusammendrückt. Es besteht dann eine drehfeste Verbindung zwischen dem Gehäuseteil 58 und dem Drehteil 15, so dass keine Bewegung des Drehteiles erfolgen kann. Auch hier erfolgt die Steuerung, wie aus der Zeichnung erkennbar, über eine Hydraulik.

Neben der Bremseinrichtung ist die Hochhalteeinrichtung 24 vorgesehen. Bei diesem Ausführungsbeispiel umfasst die Hochhalteeinrichtung eine Koppelscheibe 62, die an ihrem Außenumfang uns auch an dem Innenumfang mit einer Verzahnung versehen ist. Die Koppelscheibe 62 ist längsverschiebbar bezüglich des Drehteiles 15 angeordnet. Sie ist jedoch unverdrehbar.

In der Freigabestellung greift die äußere Verzahnung der Koppelscheibe in einen Abschnitt des Gehäuseteiles 58, während die innenliegende Verzahnung frei von einer Gegenverzahnung ist, die an einem drehfest mit dem Drehteil 15 verbundenen Zwischenstück 63 gehaltert ist. Die Koppelscheibe ist axial zum Drehteil verschiebbar, hierbei liegt eine nicht näher bezeichnete Zylinderführung vor. Durch die Verschiebung gelangt auch die innenliegende Verzahnung der Koppelscheibe in eine Gegenverzahnung am Zwischenstück 63. Auf Grund des Eingriffes ist das Drehteil drehfest an dem Gehäuseteil 58 gehaltert. Es sei hier noch erwähnt, dass bei Überführung in die drehfeste Halterung die Innenverzahnung der Koppelscheibe eine leichte Drehbewegung ausübt, durch die gewährleistet wird, dass bei der Verschiebebewegung die Verzahnung der Koppelscheibe immer in eine Zahnlücke der Gegenverzahnung eingreift.

Das Gehäuseteil 58 ist an einem Gehäuseträger 64 befestigt. Dieser Gehäuseträger lagert über ein Kugellager das Drehteil 15.

Am Außenumfang des Gehäuseträgers 64 ist ebenfalls ein Kugellager vorgesehen, um eine Drehbewegung der Schwungradscheibe 11 auf dem Gehäuseträger zu ermöglichen.

Das Drehteil 15 setzt sich im Gehäuseträger 64 fort und ist mit dem Ende an ein Untersetzungsgetriebe 51 angeordnet und zwar an dem Sonnenrad eines Planetengetriebes.

Am Ausgang des Untersetzungsgetriebes 51 ist eine Nabe 65 angeordnet. Diese Nabe nimmt das Drehteil zur Kurbelwelle 13 hin auf, so dass eine drehfeste Verbindung zustande kommt. Das Untersetzungsgetriebe reduziert wesentlich die Drehgeschwindigkeit des Drehteiles.

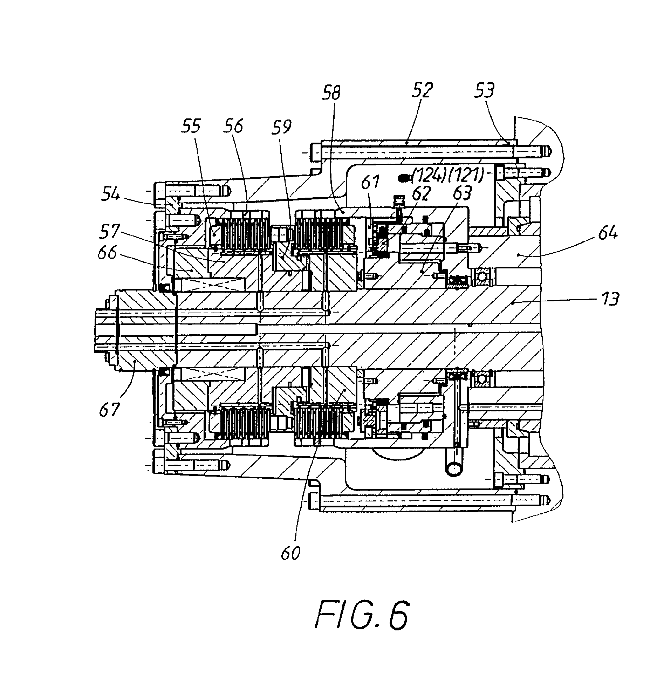

Bei dem Ausführungsbeispiel nach Fig. 6 sind die Einzelheiten von Kuppeleinrichtung 12, Bremseinrichtung 23 deutlich zu erkennen. An dem im Bereich des Glockenbodens 54 liegende Ende ist um das Drehteil ein Distanzring 66 sowie um die Welle selber ein Adapter 67 vorgesehen.

Es sei noch hier erwähnt, dass die Verschiebung bzw. die Einstellung der Kupplungsteile, Bremsteile und der Hochhalteeinrichtung durch eine Hydraulikanordnung geschehen kann, deren Leitungen teilweise angegeben sind.

In den Zeichnungen 7 bis 23 ist eine Einrichtung als Verriegelungsvorrichtung schematisch dargestellt. Sie ist zwischen einem ersten Maschinenteil 120 und einem zweiten Maschinenteil 121 vorgesehen. Das Maschinenteil 120 übergreift das Maschinenteil 121 konzentrisch, so dass beide Maschinenteile gemeinsam eine Drehbewegung ausführen können. Beispielsweise könnte das eine Maschinenteil eine Antriebswelle 13 sein, die die Drehbewegung auf das zweite Maschinenteil überträgt.

Bei einer anderen Konstruktion wäre das erste Maschinenteil fest gelagert, so dass in einer Verriegelungsstellung das zweite Maschinenteil keine Drehbewegung ausüben kann. Die Verriegelungsstellung ist dann gegeben, wenn die beiden Maschinenteile unverdrehbar zueinander sind.

An dem ersten Maschinenteil ist eine Innenverzahnung 122 vorgesehen. An dem zweiten Maschinenteil ist eine Verzahnung 123 angeordnet. Damit eine Kopplung zwischen den beiden Maschinenteilen 120 und 121 stattfindet, ist eine Koppelscheibe 124 vorgesehen, die mit ihrer Außenverzahnung 125 in die Innenverzahnung 122 greift und mit ihrer Innenverzahnung 126 in die Außenverzahnung 123 des zweiten Maschinenteiles 121. Um die Koppelscheibe 124 bewegen zu können, ist ein Kolben 129 vorgesehen, der in einem Zylinder hin und her beweglich ist, hierbei ist der Zylinder als Ringzylinder ausgebildet. Die Innenwand des ersten Maschinenteiles sowie eine Zylinderwand 130 bilden dabei den Zylinder. Der Kolben ist gegenüber dem Zylinder durch Dichtungen abgedichtet, damit keine Hydraulikflüssigkeit auslaufen kann.

Parallel der Koppelscheibe 124 ist eine Ringscheibe 127 vorgesehen. Diese Ringscheibe ist mit einer Außenverzahnung 128 ausgestattet, die auch in die Innenverzahnung 122 des ersten Maschinenteiles eingreift. Der Kolben 129 ist über eine Schraube 135 mit der Ringscheibe 127 verbunden. Zwischen der Ringscheibe 127 und der Koppelscheibe 124 ist eine Tellerfeder 136 vorgesehen, mit der die Ringscheibe bei einer Bewegung des Kolbens in die Verriegelungsstellung die Koppelscheibe in ihre Eingriffslage bewegt. Nachzutragen bleibt hier noch, dass ein Hydraulikanschluss 123 vorgesehen ist. Über den Hydraulikanschluss wird die Hydraulikflüssigkeit zum einen in den Bereich 131 gedrückt, wodurch der Kolben eine nach links Bewegung ausführt. Bei der Zurückbewegung wird die Hydraulikflüssigkeit in den Rückdruckbereich 132 gefördert. Es sei hier noch erwähnt, dass die Ringscheibe soweit gegen die Koppelscheibe bewegbar ist, dass die Tellerfeder 136 vollständig in eine Aufnahme 139 der Ringscheibe 127 drückbar ist.

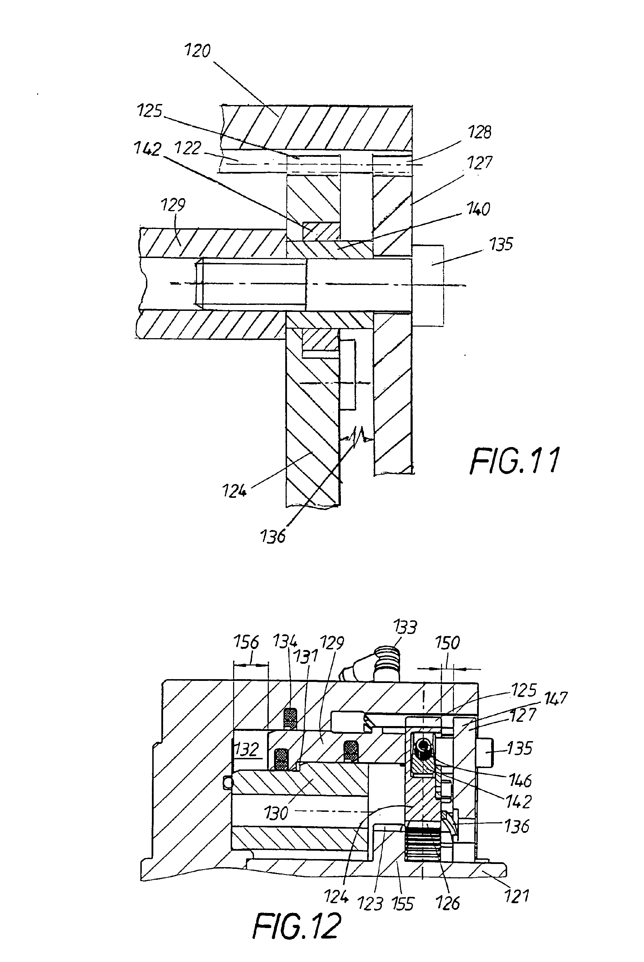

In Fig. 11 ist die Befestigung der Ringscheibe 127 an den Kolben 129 dargestellt. Zur Befestigung ist eine Schraube 135 vorgesehen. Die Schraube ist mit ihrem einen Ende in den Kolben 129 eingeschraubt, mit ihrem anderen Ende hintergreift sie die Ringschreibe 127. Zwischen Kolben und Ringscheibe ist um den Schraubenschaft eine Hülse 140 vorgesehen. Durch diese Hülse wird auch der Abstand zwischen Kolben und Ringscheibe begrenzt. Die Hülse 140 durchquert die Koppelscheibe 124, wobei innerhalb der Koppelscheibe eine Führungsaufnahme 141 für einen Gleitstein 142 vorgesehen. Die Führungsnahme 141 dient als Kulisse für den Gleitstein 142. Bei einer Drehbewegung der Koppelscheibe gegenüber der Ringscheibe bewegt sich der Gleitstein in der Führungsaufnahme. Der Gleitstein 142 ist durch eine nicht näher bezeichnete Platte in der Führungsaufnahme 141 gehalten.

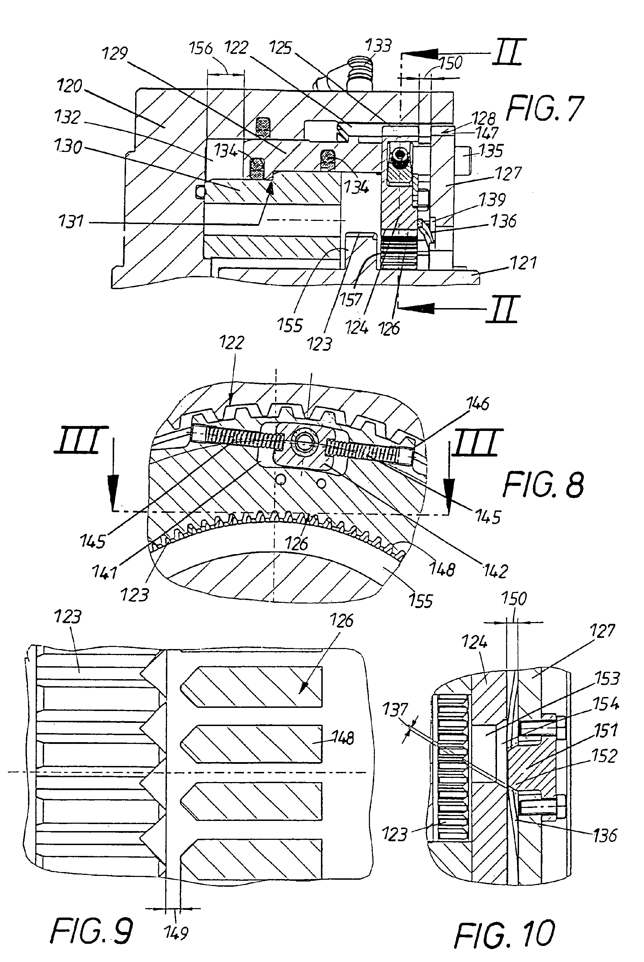

In Fig. 8 ist eine Stirnansicht der Koppelscheibe 124 sowie der Verzahnungen 122, 123 des zweiten Maschinenteiles 121 und des ersten Maschinenteiles 120 dargestellt. Die Außenverzahnung 123 des zweiten Maschinenteiles, ist auf einem ringförmig umlaufenden Kranz 155 angeordnet. In diese Außenverzahnung auf dem Kranz greift, wie schon bemerkt, die Innenverzahnung 126 der Koppelscheibe 124 ein.

Die Außenverzahnung 125 der Koppelscheibe 124 weist Zähne 144 auf, deren Breite wesentlich geringer als die Zahnlücke 143 der Zähne der Innenverzahnung 122 ist. Der Zahn 144 der Außenverzahnung der Koppelscheibe 124 greift daher mit Spiel in die Zahnlücke 143 ein, so dass er beispielsweise bei dem dargestellten Ausführungsbeispiel um eine Zahnbreite nach links oder rechts schwenkbar ist. Durch das Spiel ist eine Drehbewegung der Koppelscheibe möglich.

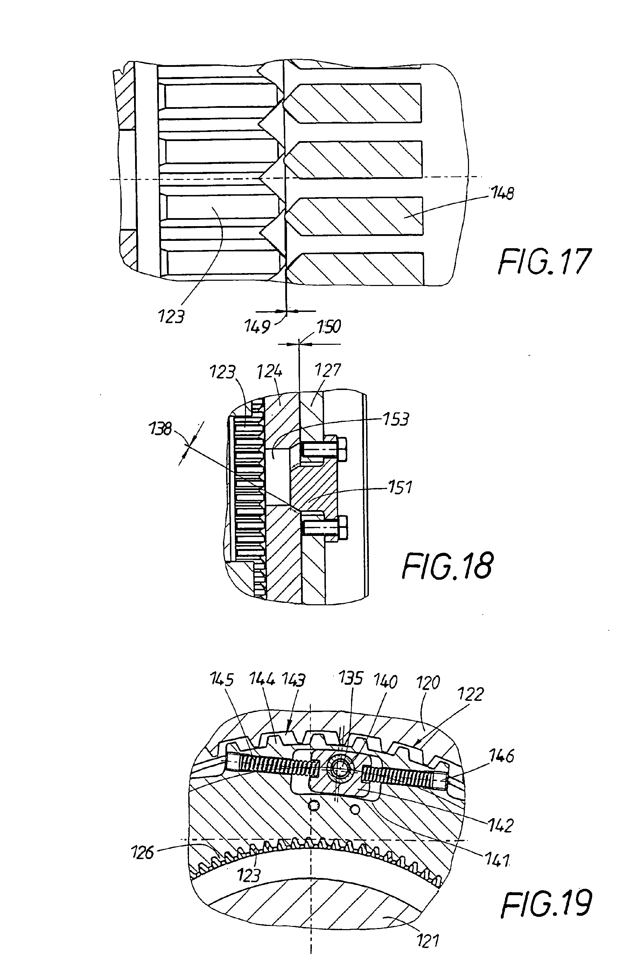

Bei einer Schwenkbewegung des Zahnes 144 bleibt der Gleitstein 142 unbewegt, während Führungsaufnahme 141 sich mit bewegt, wie aus der Fig. 8 bzw. 19 zu ersehen ist, hierbei greift an dem Kulissenstein 142 an zwei gegenüberliegenden Seiten jeweils eine Druckfeder 145 an. Der Kulissenstein liegt daher zwischen zwei Druckfedern 145. Bei einer Bewegung der Führung 141 wird daher die eine Druckfeder gespannt und die andere Druckfeder entlastet. Die Druckfedern sind mit Befestigungsschrauben 146 beaufschlagt, derart, dass eine Justierung der Federkraft möglich ist und eine Ausrichtung in der unbelasteten Lage des Kulissensteins möglich ist, die in Fig. 8 dargestellt ist. Der Kulissenstein liegt etwa in der Mitte der Führungsaufnahme 141. Nachzutragen bleibt noch, dass der Ringzahn 147 der Verzahnung 128 der Ringscheibe eine Zahnbreite hat, die der Zahnlücke 143 der Innenverzahnung 122 entspricht, mit anderen Worten, die Zähne 147 der Ringscheibe greifen nahezu spielfrei in die Innenverzahnung 122 des ersten Maschinenteils 120 ein, während die Koppelscheibe mit ihren Zähnen 144 mit Spiel in die Innenverzahnung eingreift, somit um eine gewissen Betrag gegenüber der Ringscheibe verschwenkbar ist.

In Fig. 9 sind die Zähne 148 der Innenverzahnung der Koppelscheibe und die Außenverzahnung 123 des zweiten Maschinenteils dargestellt. Die Zähne 148 und die Zähne der Außenverzahnung liegen nebeneinander, hierbei sind in dieser Ausführungsform von der Koppelscheibe lediglich die Zähne 148 zu sehen, da der Schnittverlauf so gewählt wurde.

Wie aus Fig. 9 noch zu erkennen ist, liegen die Zähne der Verzahnung 123 und die Zähne 148 in axialer Richtung in einem Abstand 149 voneinander.

Wie bereits bemerkt, ist die Ringscheibe 127 von der Koppelscheibe 124 in einem Abstand 150 von der Koppelscheibe entfernt. Die Ringscheibe ist weiterhin, wie aus Fig. 10 zu erkennen ist, mit einem Druckbolzen 151 versehen, der mit einem Verjüngungsbereich 152 ausgestattet ist, der zur Koppelscheibe 124 weist. Die Koppelscheibe selber ist mit einer Ausnehmung 153 versehen, die einen Erweiterungsbereich 154 aufweist, der zum Druckbolzen 151 hinweist. Bei einer Annäherung des Druckbolzens greifen Verjüngungsbereich und Erweiterung ineinander und drehen damit die Koppelscheibe. Hierbei ist der Abstand der Gleitflächen mit 137 und die verursachte Verdrehung der Koppelscheibe mit 138 bezeichnet.

Unter der Annahme, dass der Kolben 129 an der Zufuhr 131 zur Verriegelungsbewegung beaufschlagt wird, zieht sich der Kolben in den Zylinder zurück und zwar bis die Koppelscheibe 124 gegen den die Außenverzahnung 123 des zweiten Maschinenteiles tragenden Kranz 155 anliegt. Der Abstand des Zurückziehbereiches des Kolbens ist mit 156 bezeichnet. Eine weitere Bewegung der Koppelscheibe ist zunächst nicht möglich, nunmehr drückt jedoch die Ringscheibe die Feder 136 zusammen, so dass der Verjüngungsbereich 152 des Druckbolzens 151 beginnt in die Erweiterung 154 der Ausnehmung 153 einzugreifen.

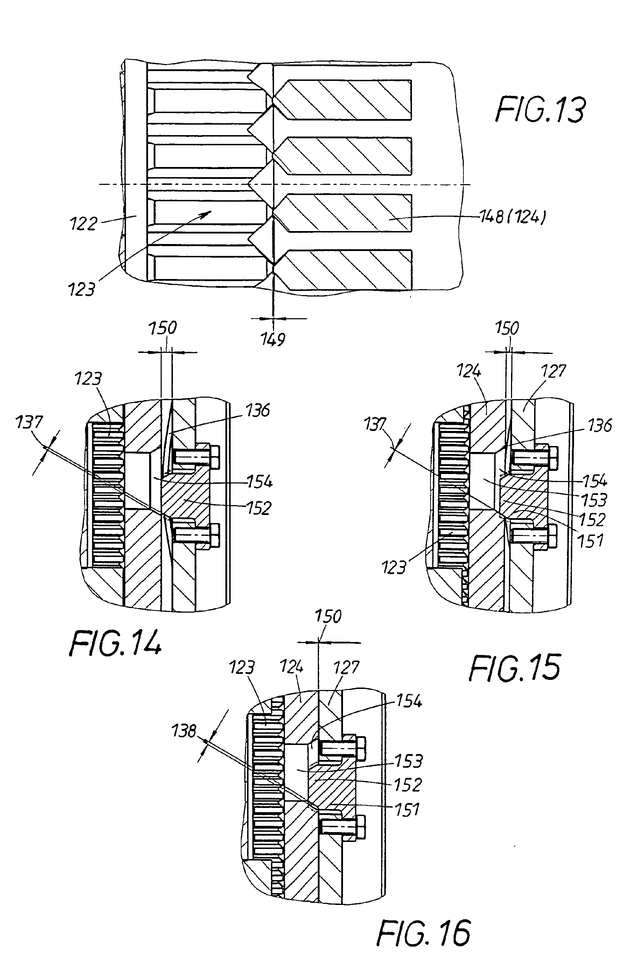

In Fig. 12 ist gezeigt, wie die Koppelscheibe 124 gegen den Zahnkranz 155 des zweiten Maschinenteils stößt, mit anderen Worten, der Abstand 157 ist gegen Null gegangen. In Fig. 14 ist zu erkennen, dass die Koppelscheibe sich zu drehen beginnt, sobald die Verjüngung weiter in die Erweiterung eingreift. In Fig. 15 ist ein größerer Teil der Verjüngung 152 in die Erweiterung 154 der Ausnehmung 153 der Koppelscheibe gelangt. In Fig. 16 schließlich liegt der Druckbolzen mit seiner Verjüngung 152 vollständig in der Ausnehmung 153 und vollständig in der Erweiterung 154 der Ausnehmung 153. Die Koppelscheibe ist, vergleiche Bezugszeichen 138 und Fig. 17, teilweise etwas gedreht und zwar derart, dass die Zähne der Innenverzahnung der Koppelscheibe 148 teilweise in die Zahnlücken der Verzahnung des zweiten Maschinenteils eingreifen. Wie aus Fig. 19 weiter zu erkennen ist, haben sich die Zähne 144 der Außenverzahnung der Koppelscheibe in den Zahnlücken 143 der Innenverzahnung des ersten Maschinenteiles verschoben.

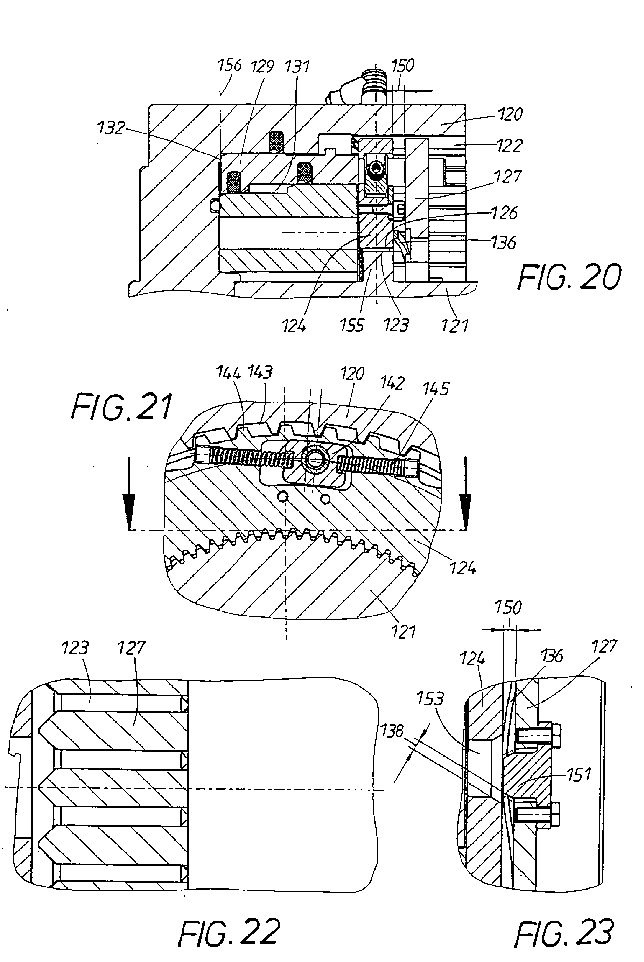

Da nunmehr die Zähne der Innenverzahnung der Koppelscheibe frei von den Zähnen der Außenverzahnung kommen, wird über die Federkraft, mit der die Koppelscheibe beaufschlagt ist, diese weiter bewegt und zwar durch den durch die Feder 136 gebildeten Kraftspeicher. In Fig. 20 ist zu erkennen, dass das erste und zweite Maschinenteil über die Koppelscheibe drehfest miteinander verbunden sind, das, wie schon erwähnt, bedeutet, dass eine gemeinsame gleiche Drehung eintritt oder aber, dass die Drehbewegung des zweiten Maschinenteiles gegenüber dem ersten Maschinenteil gesperrt ist, falls das erste Maschinenteil als Festteil ausgebildet ist.

In Fig. 21 ist zu erkennen, dass der Zahn 144 der Außenverzahnung der Koppelscheibe an einem Rand der Zahnlücke 143 liegt. Die Führung 141 ist durch die Drehung der Koppelscheibe und die Kraft der Federn 145 verschoben, so dass die eine Feder gespannt und die andere entspannt ist. In Fig. 22 ist nunmehr gezeigt, dass die Verzahnung der Koppelscheibe 124 in der Verzahnung des zweiten Maschinenteiles liegt. In Fig. 23 schließlich ist zu erkennen, dass der Abstand zwischen Koppelscheibe und Ringscheibe wieder seinen ursprünglichen Wert 150 einnimmt, denn die Federkraft der Feder 36 kann die Koppelscheibe weiter bewegen.

Wird nun hydraulische Flüssigkeit in den Zurückbewegungsbereich 133 geführt, bewegt sich der Kolben wieder aus dem Zylinder heraus, da durch die Hülse ein definierter Abstand zwischen Ring und Kolben gegeben ist, wird die Koppelscheibe mit bewegt, so dass sie außer Eingriff von der Verzahnung des zweiten Maschinenteiles kommt und schließlich die in Fig. 7 dargestellte Stellung erreicht.

Wichtig ist, dass die Ringscheibe und die Koppelscheibe gegeneinander verdrehbar sind, um so bei der Verriegelungsbewegung einen Ausgleich bei unterschiedlichen Zahnstellungen zu erhalten. Weiter sei noch darauf hingewiesen, dass, falls zufälligerweise die Verzahnungen Innenverzahnung von Koppelscheibe Außenverzahnung des zweiten Drehteiles genau zueinander ausgerichtet sind, eine Verdrehung der Koppelscheibe selbstverständlich nicht eintritt, da die Verdrehung dann eintritt, wenn die Koppelscheibe in ihrer Längsbewegung gegen ein Hindernis stößt.

Die Verdrehung von Koppelscheibe und Ringscheibe ist durch das radiale Spiel zwischen der Außenverzahnung der Koppelscheibe und der Innenverzahnung des ersten Maschinenteiles gegeben. Für die Drehbewegung von Koppelscheibe zur Ringscheibe ist es weiter von Bedeutung, dass das Gleitstein in der Führung radial beweglich, um so eine Relativbewegung des Gleitsteins zur Koppelscheibe zu erreichen. Als weiteres Merkmal ist von Bedeutung, dass der Gleitstein üblicherweise in einer Mittellage ruht, um so das erforderliche Spiel bei der Schließbewegung nach beiden Richtungen zur Verfügung zu haben.

Wie bereits erwähnt, sind die dargestellten Ausführungsformen nur beispielsweise Verwirklichungen der Erfindung. Diese ist nicht darauf beschränkt, vielmehr sind noch mancherlei Abänderungen möglich. Statt der erwähnten hydraulischen Steuerung könnte auch eine elektrische Steuerung oder aber eine gasförmige Steuerung vorgenommen werden. Die Anordnung der Hochhalteeinrichtung könnte auch zwischen dem Kurbelabschnitt und der Kupplung für den Antrieb angeordnet sein. Statt der Kurbelwelle könnte auch eine Exzenterwelle zur Bewegung des Werkzeugs verwendet werden. Statt des Planetengetriebes kann die Untersetzung auch über ein anderes Untersetzungsgetriebe erfolgen. Schließlich könnte die Anordnung von Hochhalteeinrichtung und Bremseinrichtung als Baueinheit ausgebildet sein, was montagefreundlich und reparaturfreundlich ist. Bei einer kompakten Bauweise könnte die Hochhalteeinrichtung, die Bremseinrichtung und die Kupplungseinrichtung eine Baueinheit bilden, wodurch die Steuerung dieser Einrichtungen sowie die Montage vereinfacht würde.Die Tellerfeder könnte auch durch Druckfedern oder Spiralfedern ersetzt werden. Wichtig ist, dass zwischen der Koppelscheibe und der Ringscheibe bei einer Gegeneinanderbewegung ein genügend großer Kraftspeicher entsteht. Die Außenverzahnung des zweiten Maschinenteiles sowie die Innenverzahnung des ersten Maschinenteiles müssten mit den Maschinenteilen nicht materialeinheitlich sein. Die Verzahnungen könnten auch auf Ringen angeordnet werden, die fest mit den jeweiligen Maschinenteilen verbunden sind. Das Spiel zwischen den Zähnen der Innenverzahnung des Maschinenteiles und der Koppelscheibe soll so bemessen sein, dass eine gewisse Verdrehung der Koppelscheibe möglich ist, und somit eine Ausrichtung der zu kuppelnden Zähne vom zweiten Maschinenteil und Koppelscheibe möglich sein. Bei einer anderen Gestaltung könnten die 1 Zähne der Innenverzahnung der Koppelscheibe eine so große Zahnlücke haben, dass eine Verdrehung der Koppelscheibe bezüglich des zweiten Maschinenteiles möglich ist. Statt bei einer Hochhalteeinrichtung könnte die freischaltbare Verriegelung oder Blockierung auch bei anderen Einrichtungen erfolgen, beispielsweise bei Seilwinden oder Aufzügen.

### Bezugszeichenliste:

- 10: Antrieb
- 11: Schwungrad
- 12: Kupplung
- 13: Kurbelwelle
- 14: Kurbelabschnitt
- 15: Drehteil
- 16: Stößel
- 17: bewegbares Werkzeug
- 18: feststehendes Werkzeug
- 19: Auflager
- 20: Werkstück
- 21: Lager für 13
- 22: Lager für 13
- 23: Bremse
- 24: Hochhalteeinrichtung
- 25: Gehäuse von 23 und 24
- 26: feststehende Lamellen von 23
- 27: Führung für 26
- 28: drehbare Lamellen
- 29: Führung für 28
- 30: Anschlag
- 31: Hauptkolben
- 32: Zahnkranzabschnitt
- 33: Führung für 32
- 34: Feder
- 35: Anschlag
- 36: Planverzahnung
- 37: Abschnitt
- 38: Gegenplanverzahnung
- 39: Festabschnitt von 24
- 40: Steuerleitungen
- 41: Steuerleitung
- 42: Steuerleitung
- 43: Kontrolleinrichtung
- 44: nutenartige Ausnehmung
- 45,46,47: Radialabschnitt
- 48: Öffnung in 25
- 49: Stirnverzahnung
- 50: Gegenstirnverzahnung
- 51: Untersetzungsgetriebe
- 52: Übertragungsglocke
- 53: Glockenrand
- 54: Glockenboden
- 55: Anschlagscheibe (-ring)
- 56: Halterung der äußeren Kupplungslamellen
- 57: Halterung der inneren Kupplungslamellen
- 58: Gehäuseteil für äußere Bremslamellen
- 59: Kolben
- 60: Bremsenhalterung für innere Lamellen
- 61: Verriegelungsring
- 62: Koppelscheibe
- 63: Zwischenstück
- 64: Gehäuseträger
- 65: Nabe
- 66: Distanzring
- 67: Adapter
- 120: erstes Maschinenteil
- 121: zweites Maschinenteil
- 122: Innenverzahnung von 20
- 123: Außenverzahnung von 21
- 124: Koppelscheibe von 24
- 125: Außenverzahnung von 24
- 126: Innenverzahnung von 24
- 127: Ringscheibe
- 128: Außenverzahnung von 27
- 129: Kolben
- 130: Zylinderwand
- 131: Verriegelungsbewegungsbereich
- 132: Rückbewegungsbereich
- 133: Hydraulikanschluss
- 134: Dichtungen
- 135: Schrauben
- 136: Tellerfeder
- 137: Abstandsbereich zwischen Verjüngung und Erweiterung von 51
- 138: Drehbereich
- 139: Aufnahme für 36
- 140: Hülse in 24
- 141: Führungsaufnahme in 24
- 142: Gleitstein in 24
- 143: Zahnlücke in 22
- 144: Zahn von 25 von 24
- 145: Druckfedern an 42
- 146: Befestigungsschraube für 45
- 147: Zähne von 27 an 21
- 148: Zähne von 26 von 24
- 149: Axialabstand von 23 und 48
- 150: Abstand von Ringscheibe und Koppelscheibe
- 151: Druckbolzen an 27
- 152: Verjüngungsbereich
- 153: Ausnehmung in 24
- 154: Erweiterung an 53
- 155: Zahnkranz für 23 an 21
- 156: Abstand des Kolbens von 20
- 157: Abstand von 55 an 24

## Patentansprüche

1. Einrichtung für eine Bearbeitungsmaschine, insbesondere Stanzmaschine, Presse od.dgl. mit wenigstens einem bewegbaren Werkzeug (17), über das ein Werkstück (20) bearbeitbar ist, mit einem Antrieb (10) zur Bewegung eines das Werkzeug (17) bewegenden Drehteiles, insbesondere Kurbelwelle (13), Exzenterwelle od. dgl., mit einer Bremseinrichtung (23) zur Stillsetzung der Bewegung des Drehteiles (13) und mit einer Hochhalteeinrichtung (24) zur Sperrung der Bewegung des bewegbaren Werkzeuges,
**dadurch gekennzeichnet,**
**dass** die Hochhalteeinrichtung (24) an die Bremseinrichtung (23) angebaut ist, hierbei liegen bezüglich des Antriebes (10) Hochhalteeinrichtung (24) und Bremseinrichtung (23) nebeneinander, wobei ein Teil der Hochhalteeinrichtung (24) und ein Teil der Bremseinrichtung (23) an einem gemeinsamen Gehäuseabschnitt (25, 50) angreifen und dass die drehbare Hochhalteeinrichtung (24) formschlüssig mit dem Drehteil (13) kuppelbar ist zur Sperrung der Drehbewegung des Drehteiles (13).

2. Einrichtung nach Anspruch 1, **dadurch gekennzeichnet, dass** Hochhalteeinrichtung (24) und Bremseinrichtung (23) als Baueinheit ausgebildet ist.

3. Einrichtung nach Anspruch 1 oder 2, **dadurch gekennzeichnet, dass** die Hochhalteeinrichtung (24) zwischen der Kupplung (12) des Antriebes (10) und dem Kurbelabschnitt (14) bzw. dem Exzenterabschnitt angeordnet ist.

4. Einrichtung nach einem der Ansprüche 1 bis 3, **dadurch gekennzeichnet, dass** zwischen Hochhalteeinrichtung (24) und Kurbelabschnitt (14) bzw. Exzenterabschnitt ein Untersetzungsgetriebe (51) angeordnet ist.

5. Einrichtung nach einem der Ansprüche 1 bis 4, **dadurch gekennzeichnet, dass** Antrieb (10), Kupplungseinrichtung (12), Bremseinrichtung (23), Hochhalteeinrichtung (24), Untersetzungsgetriebe (51), Kurbelabschnitt (14) bzw. Exzenterabschnitt im Kraftübertragungssinne hintereinander angeordnet sind.

6. Einrichtung nach einem der Ansprüche 1 bis 5, **dadurch gekennzeichnet, dass** in Achsrichtung des Antriebes (10) mit Schwungrad (11) gesehen auf einer Seite des Antriebes (10) mit Schwungrad (11), Kupplungseinrichtung (12), Bremseinrichtung (29) und Hochhalteeinrichtung (24) liegen und auf der anderen Seite Untersetzungsgetriebe (51) und Kurbelabschnitt (14) bzw. Exzenterabschnitt.

7. Einrichtung nach einem der Ansprüche 1 bis 6, **dadurch gekennzeichnet, dass** eine Glockenübertragung an der Seite des Antriebes (10, 11) vorgesehen ist, an der die Hochhalteeinrichtung (24) liegt, hierbei ist der Glockenrand (53) drehfest an dem Antrieb (10) mit Schwungrad (11) vorgesehen.

8. Hochhalteeinrichtung nach einem der Ansprüche 1 bis 7, **dadurch gekennzeichnet, dass** die Hochhaltereinrichtung (24) elektrisch und/oder fluid gesteuert ist.

9. Hochhalteeinrichtung nach einem der Ansprüche 1 bis 8, **dadurch gekennzeichnet, dass** die Hochhalteeinrichtung (24) mit einem Zahnkranzabschnitt (32) drehfest an dem Drehteil (15) angeordnet ist, hierbei greift der Zahnkranz (36) zur Sperrung der Bewegung in einen Gegenzahnkranz (38).

10. Hochhalteeinrichtung nach einem der Ansprüche 1 bis 9, **dadurch gekennzeichnet, dass** die Hochhalteeinrichtung (24) mit einem Abschnitt (39) fest an dem Gehäuse (25) vorgesehen ist.

11. Hochhalteeinrichtung nach einem der Ansprüche 1 bis 10, **dadurch gekennzeichnet, dass** ein Abschnitt (37) der Hochhalteeinrichtung (24) mit einem Gegenzahnkranz (38) ausgestattet ist, und dass der Abschnitt längsverschiebbar am Gehäuse (25) gelagert ist.

12. Hochhalteeinrichtung nach einem der Ansprüche 1 bis 11, **dadurch gekennzeichnet, dass** der Zahnkranzabschnitt (32) zur Achse des Drehteiles (15) verschiebbar ist.

13. Hochhalteeinrichtung nach einem der Ansprüche 1 bis 12, **dadurch gekennzeichnet, dass** bei der Zahnkranzabschnittsverschiebung der Zahnkranzabschnitt (32) über eine Führung (33) eine Drehbewegung ausführt.

14. Hochhalteeinrichtung nach einem der Ansprüche 1 bis 13, **dadurch gekennzeichnet, dass** der Zahnkranzabschnitt (32) in seiner einen durch einen Anschlag (35) begrenzten Endstellung durch eine Feder (34) belastet ist.

15. Hochhalteeinrichtung nach einem der Ansprüche 1 bis 14, **dadurch gekennzeichnet**, das der längsverschiebbare Gegenzahnabschnitt (37) in eine am feststehenden Bremsengehäuse (25) vorgesehene Führung (27) eingreift.

16. Hochhalteeinrichtung nach einem der Ansprüche 1 bis 15, **dadurch gekennzeichnet, dass** die Führung (27) zugleich für die axiale Bewegung der sich nicht drehenden Lamellen (26) einer Lamellenbremse ausgebildet ist.

17. Hochhalteeinrichtung nach einem der Ansprüche 1 bis 16, **dadurch gekennzeichnet, dass** die Blockierstellung der Hochhalteeinrichtung (24) für das Werkzeug (17) durch eine Überwachungseinrichtung (43) anzeigbar ist.

18. Hochhalteeinrichtung nach einem der Ansprüche 1 bis 17, **dadurch gekennzeichnet, dass** sowohl die Zähne (36) des Zahnkranzes (32) als auch die Zähne (38) des Gegenzahnkranzes (37) aus einer Planverzahnung aufgebaut sind.

19. Hochhalteeinrichtung nach einem der Ansprüche 1 bis 18, **dadurch gekennzeichnet, dass** sowohl die Zähne (49) des Zahnkranzabschnittes (32) als auch die Gegenzähne (50) des Abschnittes (37) aus einer Stirnverzahnung aufgebaut sind.

20. Hochhalteeinrichtung nach einem der Ansprüche 1 bis 19, **dadurch gekennzeichnet, dass** die Führung (33) der Zahnkranzabschnitte als Teil eines langgezogenen Gewindeabschnittes ausgebildet ist.

21. Einrichtung nach einem der Ansprüche 1 bis 20, **dadurch gekennzeichnet, dass** zur lösbaren drehfesten Verbindung von konzentrisch angeordneten Maschinenteilen, von denen ein Maschinenteil eine Innenverzahnung und ein anderen Maschinenteil eine Außenverzahnung trägt, mit einer Kupplung die eine ringartige Koppelscheibe zwischen zwei Endstellungen - einer Verriegelungsstellung und einer Freigabestellung - bewegt, hierbei weist die Koppelscheibe an ihrem Außenmantel sowie an ihrem Innenmantel eine Verzahnung auf, wobei die Verzahnung des Außenmantels an die Innenverzahnung des einen Maschinenteils greift und dass die Innenverzahnung (126) der Koppelscheibe (124) in der Verriegelungsstellung in die Verzahnung (123) des anderen Maschinenteils (121) greift, dass die Verzahnung (125) der Koppelscheibe mit Spiel in die Innenverzahnung (122) des ersten Maschinenteils (120) greift, hierbei liegt das Spiel wenigstens in der Größe einer viertel Zahnbreite eines Zahnes (124) der Koppelscheibe, wobei bei Überführung in die Verriegelungsstellung die Koppelscheibe (124) gegenüber dem ersten Maschinenteil (120) verdrehbar gelagert ist.

22. Einrichtung nach einem der Ansprüche 1 oder 21, **dadurch gekennzeichnet, dass** die Koppelscheibe (124) in die Verriegelungsstellung über eine parallel zur Koppelscheibe (124) liegende Ringscheibe (127) überführbar ist.

23. Einrichtung nach einem der Ansprüche 1 bis 22, **dadurch gekennzeichnet**, das die Koppelscheibe (124) und die Ringscheibe (127) mit ihrer Außenverzahnung (125, 128) in die Innenverzahnung (122) des ersten Maschinenteils (120) axial verschiebbar ist.

24. Einrichtung nach einem der Ansprüche 1 bis 23, **dadurch gekennzeichnet, dass** zwischen Ringscheibe (127) und Koppelscheibe (124) eine Feder (136), insbesondere Wellenfeder, angeordnet ist.

25. Einrichtung nach einem der Ansprüche 1 bis 24, **dadurch gekennzeichnet, dass** Koppelscheibe (124) und Ringscheibe (127) gegeneinander verdrehbar sind, hierbei ist die Größe des Verdrehwinkels durch das Zahnspiel der Zähne der Koppelscheiben der Außenverzahnung (125) in der Innenverzahnung (122) des ersten Maschinenteils bestimmt.

26. Einrichtung nach einem der Ansprüche 1 bis 25, **dadurch gekennzeichnet, dass** die Außenverzahnung (128) der Ringscheibe (127) in die Innenverzahnung (122) des ersten Maschinenteiles greift, hierbei entspricht die Zahnbreite des Zahnes der Ringscheibe (127) der Zahnlücke (143) der Innenverzahnung des ersten Maschinenteiles (120).

27. Einrichtung nach einem der Ansprüche 1 bis 26, **dadurch gekennzeichnet, dass** die Ringscheibe (127) mit einer Schraube (135) an einem steuerbaren Kolben (129) der Kupplung befestigt ist.

28. Einrichtung nach einem der Ansprüche 1 bis 27, **dadurch gekennzeichnet, dass** sich zwischen Kolben (129) und Ringscheibe (127) eine Führungshülse (140) abstützt, hierbei durchquert die Befestigungsschraube (135) die Führungshülse (140) in ihrem Inneren während an ihrem Außenumfang ein Gleitstein (142) angeordnet ist, der in einer Kulissenführung (141) in der Koppelscheibe (124) bewegbar ist.

29. Einrichtung nach einem der Ansprüche 1 bis 28, **dadurch gekennzeichnet, dass** der Gleitstein (142) an zwei gegenüberliegenden Seiten in seiner Bewegungsrichtung liegenden Druckfedern (145) belastet ist.

30. Einrichtung nach einem der Ansprüche 1 bis 29, **dadurch gekennzeichnet, dass** die Federkraft der Befestigungsfedern (145) jeweils durch eine Schraube (146) in der Koppelscheibe (124) justierbar ist.

31. Einrichtung nach einem der Ansprüche 1 bis 30, **dadurch gekennzeichnet, dass** bei axialer Näherung von Ringscheibe (127) und Koppelscheibe (124) hervorgerufen durch Zahnberührung von Koppelscheibe und der Verzahnung (123) des Maschinenteiles (121) die Koppelscheibe (124) eine Drehbewegung ausführt, die durch das Spiel der Außenverzahnung der Koppelscheibe in der Innenverzahnung (122) des ersten Maschinenteils (120) begrenzt ist.

32. Einrichtung nach einem der Ansprüche 1 bis 31, **dadurch gekennzeichnet, dass** zur Einleitung der Drehbewegung die Ringscheibe (127) Träger eines nach der Koppelscheibe (124) gerichteten Druckbolzens (151) mit verjüngtem Ende (152) ist, hierbei liegt der Druckbolzen (151) in etwa gegenüber einer Ausnehmung (153) in der Koppelscheibe (124), die mit einer Erweiterung (154) zum Druckbolzen weist, wobei die Erweiterung (154) und die Verjüngung (152) durch die einander berührenden Winkelflächen eine Drehbewegung einleiten.

33. Einrichtung nach einem der Ansprüche 1 bis 32, **dadurch gekennzeichnet, dass** die Feder (136) zwischen den Scheiben (124) und (127) als Kraftspeicher wirkt, der die Scheiben wieder auseinander drückt, sobald die Innenverzahnung (126) der Koppelscheibe (124) in die Außenverzahnung (123) des zweiten Maschinenteils (121) eingreift.

34. Einrichtung nach einem der Ansprüche 1 bis 33, **dadurch gekennzeichnet, dass** bei außer Eingriff der Innenverzahnung (126) der Koppelscheibe (124) von der Außenverzahnung (123) des zweiten Maschinenteils (121) der Gleitstein (142) durch seine beiden Federn (145) eine Mittelstellung in der Führungsaufnahme (141) einnimmt.

35. Einrichtung nach einem der Ansprüche 1 bis 34, **dadurch gekennzeichnet, dass** die Verriegelungsstellung einstellbar ist, wenn die Relativbewegung zwischen den beiden Maschinenteilen gleich Null ist.
